# FASCICULE DE BREVET EUROPEEN

(11) **EP 3 086 962 B1**
(45) Date de publication et mention de la délivrance du brevet: **13.12.2017**
(21) Numéro de dépôt: 14816293.6
(22) Date de dépôt: 22.12.2014
(51) Int. Cl.: B60K 6/24, B60K 6/445, B60K 6/46, B60K 6/48, B60W 10/06, B60W 10/08, B60W 20/00, F02B 43/08

(54) **DISPOSITIF DE PRODUCTION D'ENERGIE A GAZOGENE**
VERGASERENERGIEGENERATOR
GASIFIER ENERGY-PRODUCTION DEVICE

(30) Priorité: 26.12.2013 FR 1363591
(43) Date de publication de la demande: 02.11.2016
(73) Titulaire: Commissariat à l'Énergie Atomique et aux Énergies Alternatives, 75015 Paris (FR)
(72) Inventeur: CHATROUX, Daniel, 38470 Teche (FR); PHLIPPOTEAU, Vincent, 38000 Grenoble (FR)
(74) Mandataire: Brevalex
(86) Numéro de dépôt international: PCT/EP2014/078973
(87) Numéro de publication internationale: WO 2015/097142

(56) Documents cités:
- CA-A1- 2 627 233
- DE-A1- 10 013 080
- FR-A- 882 793
- US-A1- 2009 090 573

## Description

La présente invention se rapporte à un dispositif de production d'énergie à gazogène et à un système d'entraînement à gazogène pour un véhicule automobile hybride.

Le dispositif à gazogène a été inventé dans les années 1920, il s'agit d'un système qui produit un gaz combustible à partir d'un combustible solide, tel que des copeaux de bois. Le gaz combustible alimente un moteur thermique qui produit une énergie mécanique qui peut être utilisée pour entraîner par exemple un essieu d'un véhicule automobile. L'utilisation d'un dispositif à gazogène permet de s'affranchir de l'utilisation de combustible fossile comme source d'énergie.

Cependant le dispositif à gazogène présente certains inconvénients.

Son démarrage est lent, en général entre 10 min et 30 min sont requises avant qu'il ne fournisse un gaz utilisable par le moteur thermique.

En outre, il peut connaître des arrêts intempestifs, en particulier du fait de problème lors de l'alimentation en combustible.

De plus, la production de gaz n'est pas facilement contrôlable. En effet, en cas d'augmentation rapide du besoin de puissance, l'amenée d'une quantité supérieure de copeaux de bois ne se traduira par la génération d'une quantité de gaz qu'après échauffement de ceux-ci. Il y a donc un retard important entre l'apport de combustible et la génération de gaz.

En cas de demande d'énergie mécanique faible, il n'est pas possible de réduire la quantité de gaz produite à moins d'arrêter le dispositif à gazogène, et encore dans ce cas il produit encore du gaz du fait de la chaleur résiduelle. Au contraire, dans un moteur thermique classique alimenté par un carburant fossile, on agit sur la vanne d'arrivée de carburant ou sur le dispositif d'injection de celui-ci.

Comme indiqué ci-dessus, lorsque l'on arrête le dispositif à gazogène, il continue à produire des gaz qui ne seront pas utilisés, soit ils seront rejetés directement dans l'environnement, soit ils nécessiteront d'être brûlés à perte. Il en résulte une pollution et un gaspillage de ressource.

Un dispositif à gazogène est donc difficilement utilisable comme source d'énergie unique et fiable pour une application nécessitant des variations rapides de puissance, avec des échelles de temps de l'ordre de la seconde ou d'une fraction de seconde en particulier d'un véhicule automobile. Pour les applications traction des véhicules, les gazogènes sont connus comme une solution obsolète d'un passé révolu qui a disparu après la seconde guerre mondiale pour laisser place aux véhicules essences et diesel.

Les dispositifs à gazogène sont par exemple utilisés dans des applications stationnaires de production d'électricité via un moteur thermique et une génératrice ou un alternateur. Les inconvénients liés au temps de démarrage et à l'arrêt du gazogène peuvent être gérés puisqu'il n'y a pas besoin d'asservir temporellement une production d'électricité à un besoin fluctuant, ce sont les autres sources d'énergie connectées au réseau qui répondent aux fluctuations de la demande.

Le document FR903260 décrit un véhicule comportant un moteur électrique et un moteur thermique alimenté par un dispositif à gazogène. Au démarrage, c'est le moteur électrique qui est sollicité, ainsi que sur les terrains plats. Le problème du démarrage lent du dispositif à gazogène est donc résolu. Le moteur thermique est utilisé lors des "points de charge", i.e. en cas de fortes pentes, combiné au moteur électrique.

En revanche, l'inconvénient lié à la gestion lors de l'arrêt du dispositif à gazogène n'est pas résolu. Les gaz produits après l'arrêt du dispositif à gazogène sont inutilisés.

### EXPOSÉ DE L'INVENTION

C'est par conséquent un but de la présente invention d'offrir un dispositif de production d'énergie à gazogène ne rencontrant pas les inconvénients mentionnés ci-dessus.

Le but énoncé ci-dessus est atteint par un dispositif de production d'énergie à gazogène comprenant un moteur thermique alimenté par les gaz combustibles produits par un dispositif à gazogène, une génératrice entrainée par le moteur thermique et au moins une batterie, le dispositif étant commandé de sorte qu'à partir d'un état de production stationnaire de gaz combustible par le dispositif à gazogène et jusqu'à l'arrêt du moteur thermique, tout le gaz combustible produit sert à alimenter le moteur thermique et à produire une énergie mécanique. Par ailleurs, la batterie fournit la part d'énergie manquante par rapport à la demande ou absorbe la part d'énergie en excès par rapport à la demande.

Avantageusement, après l'arrêt du dispositif à gazogène, celui-ci continue à produire du gaz combustible, ce gaz continue néanmoins à être converti en énergie mécanique pour charger la batterie par exemple.

Grâce à l'association d'un moteur thermique alimenté par un gazogène et d'une génératrice, même en cas de baisse de la demande d'énergie, le gaz combustible produit en continu par le gazogène est consommé par le moteur thermique et est converti en électricité pour charger une ou des batteries. Ainsi il n'y a pas de rejet de gaz combustible non brûlé qui serait source de pollution et les ressources ne sont pas gaspillées.

En d'autres termes, la production de gaz par le dispositif à gazogène est découplée de la demande d'énergie en sortie du dispositif de production d'énergie. Lorsque la production de gaz combustible est inférieure à la demande, la ou les batteries fournissent le différentiel d'énergie et lorsque la production de gaz est supérieure à la demande, l'énergie électrique produite est stockée dans la ou les batteries.

Le dispositif de production d'énergie est avantageusement utilisé pour réaliser un système d'entraînement d'un véhicule automobile, la génératrice et la batterie sont alors connectées à un moteur électrique qui est relié mécaniquement à un essieu. L'énergie mécanique est convertie en électricité par la génératrice pour alimenter le moteur électrique et/ou charger la batterie et/ou est utilisée directement pour entraîner au moins un essieu du véhicule automobile.

Le dispositif est tel que l'on convertit tout le gaz combustible produit par le gazogène à partir du moment où la production est suffisante pour alimenter le moteur thermique et pendant au moins le roulage du véhicule, en énergie mécanique qui sert soit à produire de l'électricité pour alimenter un moteur électrique, soit à entraîner directement au moins un essieu du véhicule.

Le démarrage se fait par l'intermédiaire du moteur électrique. Ainsi on pallie la lenteur de démarrage du dispositif à gazogène.

En cas d'arrêt intempestif du dispositif à gazogène, le moteur thermique s'arrête, la ou les batteries alimentent alors le moteur électrique et assurent la continuité de l'entraînement du ou des essieux, en attendant le redémarrage du gazogène.

De manière très avantageuse, afin d'optimiser le rendement du moteur thermique, la composition des gaz d'échappement est déterminé et le moteur thermique est piloté en réglant la quantité d'air arrivant dans le moteur thermique.

Pour améliorer la fiabilité du système, la génératrice peut être réalisée par l'association d'un alternateur avec un dispositif de redressement du courant alternatif, comme un pont de diode, ou un onduleur. Dans le cas d'un onduleur celui-ci est utilisé en absorption d'énergie pour réaliser la fonction de redressement, de manière avantageuse celui-ci peut être piloté en absorption sinusoïdale de courant pour minimiser les pertes dans l'alternateur.

La présente invention a alors pour objet un dispositif de production d'énergie à gazogène comportant:
- une sortie délivrant une énergie mécanique et/ou une énergie électrique,
- un dispositif à gazogène comportant une alimentation en matériau combustible, une admission d'air et une évacuation de gaz combustible,
- un moteur thermique comportant une admission d'air, une admission de gaz combustible, et une évacuation des gaz d'échappement,
- au moins une batterie de stockage de l'électricité,
- une génératrice de courant électrique,
- des moyens de connexion entre une sortie l'évacuation du gaz combustible du dispositif à gazogène et l'admission du gaz combustible du moteur thermique,
le moteur thermique étant couplé au moins à la génératrice de courant électrique pour lui fournir une énergie mécanique,
la génératrice électrique étant couplée au moins à la batterie,
des moyens de commande de sorte que les moyens de connexion entre le dispositif à gazogène et le moteur thermique injectent tout le gaz combustible produit par le dispositif à gazogène dés lors que le dispositif à gazogène produit suffisamment de gaz pour faire fonctionner le moteur thermique et jusqu'à ce que le moteur thermique soit arrêté et de sorte que l'énergie requise en sortie du dispositif de production d'énergie est indépendante de la production de gaz combustible, le différentiel entre la demande d'énergie et celle obtenue par la quantité de gaz produite par le dispositif à gazogène étant compensé par la batterie qui soit délivre l'énergie manquante, soit absorbe l'excès d'énergie mécanique produite par le moteur thermique et converti par la génératrice.

De manière préférée, la génératrice est commandée de sorte à fonctionner à tout instant t à la puissance maximale du moteur thermique pour le flux de gaz d'alimentation à l'instant ou à la puissance électrique maximale.

La vitesse de rotation du moteur thermique est de préférence commandée par le couple de la génératrice de telle sorte qu'il fonctionne à un couple élevé et à vitesse de rotation faible.

Le dispositif de production d'énergie à gazogène peut comporter une sonde en sortie des gaz d'échappement afin de déterminer la composition des gaz d'échappement, une vanne d'admission d'air dans le moteur thermique étant pilotée sur la base de cette composition.

Les moyens de commande mettent avantageusement en oeuvre un algorithme de recherche du point de fonctionnement à puissance électrique maximale.

Dan un exemple de réalisation, les moyens de connexion comportent des moyens de dérivation du gaz combustible en sortie du dispositif à gazogène, de sorte que dans une phase de démarrage avant que le dispositif à gazogène ne produise suffisamment de gaz pour alimenter le moteur thermique, le gaz combustible est dérivé et n'alimente pas le moteur thermique.

Selon une caractéristique additionnelle avantageuse, le dispositif de production d'énergie à gazogène peut comporter des moyens pour réchauffer le moteur thermique à partir de l'énergie du gaz combustible dérivé.

Le dispositif de production d'énergie à gazogène peut comporter un brûleur en aval des moyens de dérivation, de sorte à brûler le gaz combustible dérivé, un pot catalytique étant avantageusement prévu, en aval du brûleur ou formant le brûleur. Le pot catalytique peut être disposé à la sortie des gaz d'échappement du moteur thermique.

Le dispositif de production d'énergie à gazogène peut comporter un réservoir de matériau combustible et un moyen d'alimentation d'un foyer du dispositif à gazogène à partir du réservoir, le moyen d'alimentation étant avantageusement une vis sans fin.

La présente invention a également pour objet un système d'entraînement pour véhicule automobile comportant un moteur électrique et au moins un dispositif de production d'énergie à gazogène selon l'invention, dans lequel la sortie du dispositif de production d'énergie est reliée à un moteur électrique et le moteur électrique est relié mécaniquement à au moins un essieu du véhicule

Dans un exemple de réalisation, l'essieu est entrainé uniquement par le moteur électrique.

Dans un autre exemple de réalisation, le moteur thermique et le moteur électrique sont reliés mécaniquement au même essieu, de manière préférée par un train épicycloïdal.

Dans un autre exemple de réalisation, le moteur thermique et le moteur électrique sont reliés mécaniquement chacun à un essieu différent.

Le système d'entraînement peut comporter une machine électrique formant à la fois le moteur électrique et la génératrice.

Avantageusement, le système d'entraînement est tel qu'à la fin de roulage du véhicule lorsque l'essieu est à l'arrêt, le moteur thermique continue de fonctionner de sorte à convertir le gaz combustible en électricité via la génératrice.

La présente invention a également pour objet un véhicule automobile hydride comportant deux essieux et au moins un système d'entraînement selon l'invention, un des essieux étant entraîné par au moins le moteur électrique.

La présente invention a également pour objet un procédé de fonctionnement d'un dispositif de production d'énergie à gazogène selon l'invention ou du système d'entraînement selon l'invention, comportant les étapes:
a) fourniture de l'énergie au démarrage du dispositif de production d'énergie à gazogène par la batterie,
b) mise en route du dispositif à gazogène, les moyens de dérivation dérivant les gaz combustible produit de sorte qu'il ne pénètre pas dans le moteur thermique,
c) détection d'une production d'une quantité de gaz combustible suffisante pour faire fonctionner le moteur thermique,
d) les moyens de connexion dirigent tout le gaz combustible dans le moteur thermique et démarrage du moteur thermique,
e) transformation de l'énergie mécanique produite en énergie électrique par la génératrice,
d) arrêt du moteur thermique,
e) arrêt du dispositif à gazogène.

De préférence, lors de l'étape e), on recherche le maximum de puissance électrique en modifiant le couple de la génératrice appliqué au moteur thermique et en mesurant la nouvelle puissance électrique délivrée.

Entre l'étape b) et l'étape c), le gaz combustible peut servir à réchauffer le moteur thermique soit directement soit en étant brûlé.

Le dispositif à gazogène peut être démarré lorsque la batterie présente une charge inférieure un seuil donné.

De manière avantageuse, lorsque la demande en énergie est nulle, le dispositif à gazogène est arrêté et le moteur thermique continue de fonctionner pour transformer le gaz combustible qui continue d'être produit.

### BRÈVE DESCRIPTION DES DESSINS

La présente invention sera mieux comprise à l'aide de la description qui va suivre et des dessins ci-annexés sur lesquels :
- la figure 1 est un schéma de principe d'un système d'entrainement hybride d'un véhicule automobile selon un mode de réalisation,
- la figure 2 est un diagramme couple M_{A} en Nm -vitesse de rotation en tour/min - puissance en kW- rendement C en % d'un moteur thermique,
- les figures 3 à 5 sont des schémas de principe d'autres modes de réalisation,
- la figure 6 est un schéma du système de la figure 1 sur lequel ont été ajoutées des boucles de régulation.

### EXPOSÉ DÉTAILLÉ DE MODES DE RÉALISATION PARTICULIERS

Dans la description qui va suivre, l'invention sera décrite dans une application à un système d'entraînement pour véhicule automobile. Mais il sera compris que la présente invention porte sur un dispositif de production d'énergie qui peut être utilisé dans d'autres domaines que l'automobile, par exemple pour réaliser un groupe électrogène ou pour entraîner un autre élément qu'un essieu.

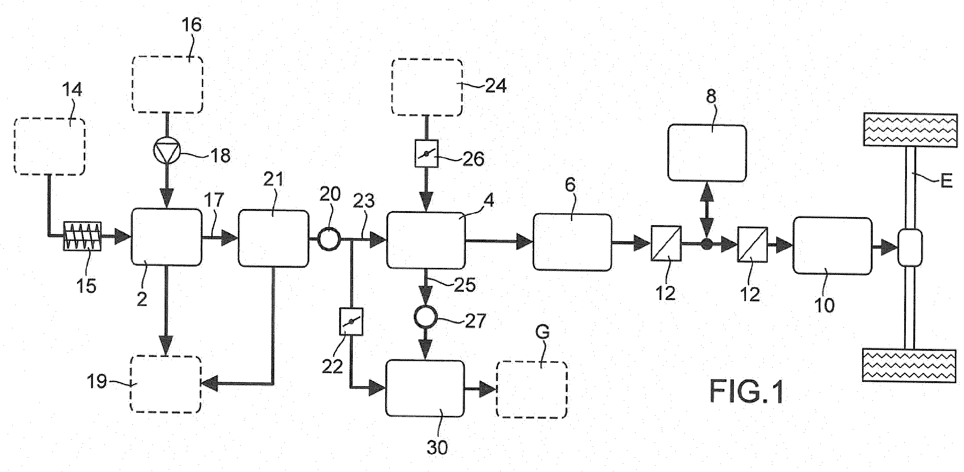

Sur la figure 1 est représenté un schéma de principe d'un système d'entrainement hybride d'un véhicule automobile selon un mode de réalisation. Le système d'entraînement comporte un dispositif à gazogène 2, un moteur thermique 4, une génératrice d'électricité 6, au moins une batterie électrique 8 et un moteur électrique 10.

Le dispositif à gazogène alimente le moteur thermique 4 en gaz combustible 23, le moteur thermique 4 entraîne la génératrice 6 qui charge la batterie 8 ou alimente le moteur électrique 10. Le moteur électrique 10 est en prise avec au moins un essieu E du véhicule automobile de sorte à le mettre en rotation et à provoquer le roulage du véhicule.

Des convertisseurs 12 sont prévus entre la génératrice 6, la batterie 8 et le moteur électrique 10.

Un dispositif à gazogène est un appareil permettant de produire un gaz combustible à partir de matières solides et combustibles tels que des copeaux de bois, des résidus de biomasse ou tout autre combustible solide, le charbon de bois, coke ou anthracite, permettant d'alimenter des moteurs à explosion.

Le principe du gazogène est de provoquer une combustion incomplète par exemple du bois en contrôlant l'alimentation en air du foyer, de manière à produire des gaz combustibles tels que du CO (monoxyde de carbone), du H2 (dihydrogène), et du CH4 (méthane).

Le dispositif à gazogène comporte un réservoir 14 d'alimentation en combustible, un foyer de combustion 2, une admission d'air 16 dans le foyer et une évacuation 17 du gaz combustible produit. L'alimentation du foyer en matériau combustible, par exemple en copeaux de bois, se fait avantageusement au moyen d'une vis sans fin 15, évitant ou pour le moins réduisant le risque d'apparition du phénomène de voûte dans le combustible interrompant l'alimentation du gazogène. Un ventilateur ou un compresseur 18 est avantageusement prévu pour réguler le débit d'air à travers l'admission d'air 16 et sa commande sera décrite ci-dessous.

Un ou des filtres 21 sont avantageusement interposés entre la sortie 17 des gaz combustible du gazogène et l'entrée 23 du moteur thermique 4 afin de collecter les cendres. Le gazogène 2 comporte également une évacuation des cendres vers un cendrier 19 pour collecter les cendres produites dans le foyer par la combustion du combustible. Le ou les filtres sont également avantageusement connectés au cendrier 19 pour collecter les cendres retenues. Ce ou ces filtres 21 sont de préférence tangentiels et verticaux, de façon à faire tomber les poussières et les cendres. Des filtres « cyclones » peuvent permettre une séparation très efficace des poussières et cendres.

De préférence une sonde 20 est prévue en sortie du dispositif à gazogène 2 pour déterminer la composition de gaz en sortie, par exemple en aval du ou des filtres du dispositif à gazogène.

En outre, des moyens de dérivation 22 sont prévus entre le dispositif à gazogène 2 et le moteur thermique 4 pour dériver les gaz produits par le gazogène en particulier en phase de démarrage afin qu'ils n'alimentent pas le moteur thermique 4. Ces moyens 22 seront décrits ci-dessous.

Le moteur thermique 4 comporte au moins une chambre de combustion, une admission d'air 24 et une vanne pilotable 26 pour régler le débit d'air à travers l'admission 24. La commande de la vanne pilotable 26 sera décrite ci-dessous. Le moteur thermique 4 comporte également une alimentation en gaz combustible 23 et un échappement 25 pour l'évacuation des gaz de combustion. Un pot catalytique est avantageusement prévu à l'échappement 25. Une sonde 27, type sonde lambda, est avantageusement disposée au niveau de l'échappement 25 pour déterminer la composition des gaz d'échappement. De préférence un brûleur 30 est prévu à la sortie des moyens de dérivation 22. Avantageusement un pot catalytique est prévu en sortie du brûleur 30, il s'agit de préférence du même que celui du moteur thermique.

Le fonctionnement du système d'entraînement va maintenant être décrit :
Au démarrage du véhicule, le dispositif à gazogène 2 et le moteur thermique 4 sont à l'arrêt, la batterie 8 alimente le moteur électrique 10 et assure le démarrage du véhicule. Le moteur électrique 4 est piloté en couple, selon la sollicitation du conducteur par exemple sur la pédale d'accélérateur dès la mise en route. Puisque ce n'est pas le dispositif à gazogène qui intervient lors de la phase de démarrage, il n'y a pas de phase d'attente pour entraîner l'essieu E.

Il est avantageusement prévu que le dispositif à gazogène 2 soit démarré automatiquement, par exemple lorsque le niveau d'état de charge du ou des batteries 8 passe en dessous d'un seuil donné. Alternativement, la commande de démarrage du dispositif à gazogène peut être donnée par le conducteur. A ce moment, le moteur thermique 4 est toujours éteint. On peut prévoir alternativement que le dispositif à gazogène 2 soit démarré dès le démarrage du véhicule afin qu'il remplace la ou les batteries 8 dès que possible.

L'allumage du dispositif à gazogène est avantageusement électrique. Le dispositif à gazogène 2 est alimenté en combustible. De préférence, le combustible est sous forme de morceaux de petite taille dont l'épaisseur est inférieure au cm. Il peut avantageusement être rajouté de l'eau, qui favorise la production d'hydrogène, pour réaliser un vaporeformage et/ou un combustible liquide tel qu'une huile. Avantageusement, il peut être prévu de chauffer le combustible, par exemple les copeaux, avant leur admission dans le foyer. Ce chauffage peut être obtenu par exemple en chauffant par induction la vis sans fin d'alimentation 15, ou en réalisant un échange thermique entre le pot catalytique et le conduit d'amenée de combustible.

L'admission d'air 16 ouverte, permet au foyer du dispositif à gazogène 2 d'être alimenté en air.

De manière avantageuse, le dispositif à gazogène peut être alimenté en air par l'alimentation 16, au moyen d'un compresseur ou un ventilateur 18, ce qui permet d'optimiser la qualité du gaz de sortie en utilisant la sonde 20 à la sortie du dispositif à gazogène 2.

Dans cette phase de mise en route du gazogène, qui peut durer de 10 à 30 minutes, le dispositif à gazogène 2 ne produit pas suffisamment de gaz combustible pour alimenter le moteur thermique 4. Le moteur thermique 4 est toujours à l'arrêt et les moyens de dérivation 22 sont ouverts de sorte que le gaz combustible n'alimente pas le moteur thermique 4.

Lorsqu'il y a un ajout d'eau pour réaliser du vapo-reformage, le gazogène peut avoir un fonctionnement endothermique. En l'absence d'eau, la génération du gaz combustible produit de la chaleur qui peut avantageusement être récupérée, par exemple pour préchauffer le moteur thermique 4, via son circuit de refroidissement.

Ce préchauffage peut se faire par les fumées chaudes des gaz combustibles produits par le dispositif à gazogène et/ou par la combustion des gaz combustibles produit par le dispositif à gazogène. Dans ce dernier cas, le brûleur 30 brûle les gaz combustibles. En outre, de manière avantageuse, le pot catalytique prévu en aval du brûleur limite les rejets de gaz polluants dans l'environnement. Ce pot catalytique est de préférence celui disposé en sortie de l'échappement du moteur thermique. La fonction brûleur peut être réalisée par le pot catalytique en sortie de moteur thermique. Un préchauffage électrique du pot catalytique peut être utilisé pour accélérer sa montée en température et minimiser son temps de démarrage, phase pendant laquelle les polluants ne sont pas totalement éliminés. Alternativement, le fluide de refroidissement du moteur thermique peut circuler dans des parties chaudes du dispositif à gazogène en veillant cependant à ne pas nuire à la montée en température du gazogène.

La préchauffe du moteur thermique 4 lui permettra de fonctionner directement à une température suffisante lors de sa mise en route. On évite ainsi le démarrage moteur froid qui impacte sur la durée de vie et les besoins de maintenance par exemple. En disposant un brûleur 30 pour brûler les gaz produits par le gazogène en phase démarrage et un pot catalytique en aval, on évite de rejeter ces gaz dans l'environnement. En outre, ils sont valorisés en chauffant le moteur thermique. Les gaz rejetés désignés G sont des gaz d'échappement classiques.

La chaleur du pot catalytique peut également être utilisée pour le préchauffage du gazogène et/ou du moteur thermique.

En outre, en utilisant le catalyseur du moteur thermique pour les gaz brûlés, celui-ci sera chaud lorsque le moteur thermique va produire des gaz d'échappement, le pot catalytique sera donc efficace immédiatement et la pollution sera réduite.

Pendant cette phase, l'utilisateur continue de faire fonctionner son véhicule selon ses besoins, en tirant la puissance de la ou des batteries 8.

Lorsque le dispositif à gazogène est chaud et produit du gaz combustible en suffisamment grande quantité pour alimenter le moteur thermique 4, le moyens de dérivation 22 sont fermés et le moteur thermique 4 est alimenté en gaz combustible, il est alors mis en route par exemple par la machine électrique formant la génératrice 6, qui est utilisée à cet instant comme moteur. Par exemple, si la génératrice est réalisée par un alternateur associé à un onduleur, le démarrage peut être réalisé en commandant l'onduleur pour commander la machine électrique en entrainement (moteur) pendant cette phase de démarrage, puis en alternateur après démarrage. L'atteinte d'une production de gaz suffisante par le gazogène peut être mesurée par la mesure du débit et du pourcentage de gaz combustible dans le mélange, par une sonde 20, sonde catalytique par exemple.

Entre le dispositif à gazogène et le moteur thermique, des moyens de refroidissement du gaz combustible et/ou de séchage du gaz combustible peuvent être prévus.

Le moteur thermique 4 est alimenté par le gaz combustible issu du dispositif à gazogène mélangé avec de l'air extérieur en pilotant la vanne d'admission 26 pour être à la stoechiométrie ou proche de celle-ci. La régulation de ce mélange peut de manière préférée utiliser l'information de la sonde lambda 25 en sortie du moteur thermique 4, une boucle de régulation gère la richesse du mélange sur la base de cette information.

Le système d'entraînement est dans son fonctionnement normal, le moteur thermique 4 entraîne la génératrice 6 qui alimente en courant le moteur électrique 10 qui entraîne l'essieu E.

Les batteries 8 sont rechargées par la génératrice 6 par exemple pendant des phases lors desquels la génératrice 6 produit plus que la demande. On peut envisager de charger la ou les batteries 8 et d'alimenter le moteur électrique 10 simultanément.

En cas d'arrêt intempestif du dispositif à gazogène, la ou les batteries 8 assurent la continuité de service. Elles alimentent le moteur électrique 10 jusqu'à ce que le dispositif à gazogène 2 soit de nouveau en état de produire du gaz combustible en suffisamment grande quantité. Il est à noter que, dans ce cas, le redémarrage du dispositif à gazogène est plus rapide que son démarrage initial.

Il est noté cependant que, grâce à l'invention, de tels arrêts intempestifs sont moins nombreux. En effet, selon l'invention, le pilotage du dispositif à gazogène 2 et le pilotage du moteur électrique 10 sont indépendants, grâce à la batterie 8. Il est alors possible d'éviter l'arrêt du dispositif à gazogène 2 en surveillant certains paramètres du gazogène, par exemple des températures à différents endroits, etc. Cela se fait par une action sur l'alimentation en air 16 par le compresseur 18. Pendant ce temps, le pilotage du moteur thermique 4 reste inchangé, celui-ci se fait avantageusement "à puissance maximale " comme cela sera expliqué par la suite.

La demande du moteur électrique 10 n'influe donc pas sur le fonctionnement du gazogène.

Si le moteur thermique 4 doit absorber une puissance trop faible, et que les batteries 8 sont entièrement chargées, il est aussi possible de l'arrêter, et de faire sortir les gaz combustibles en ouvrant les moyens de déviation 22, les gaz combustibles seront alors brûlés. Ce mode de fonctionnement avec perte d'énergie est évité en anticipant l'arrêt du gazogène avant que les batteries 8 ne soient complètement chargées, par exemple lors de l'atteinte d'un seuil prédéfini. Le moteur électrique 10 est alimenté uniquement par la batterie. L'arrêt du gazogène est par exemple obtenu par l'arrêt de l'alimentation en combustible. Le dispositif à gazogène continue à produire des gaz même après son arrêt pendant un certain temps, le pilotage du moteur thermique 4 reste inchangé jusqu'à ce que cette puissance soit trop faible et qu'on l'arrête lui également.

Lors de l'arrêt du véhicule, le dispositif à gazogène 2 est arrêté, mais il continue de produire du gaz. Le moteur thermique 4 continue à fonctionner pour consommer le gaz produit, et la génératrice 6 continue à charger la batterie 8, même lorsque le véhicule a fini sa mission. Ainsi tout le gaz produit par le dispositif à gazogène est converti en énergie réutilisable.

Lorsque le véhicule est à l'arrêt, que le gazogène ne produit plus de gaz, et que les batteries ont besoin d'être chargées, il est possible de les recharger sur le réseau électrique, comme tout véhicule électrique.

Nous allons maintenant décrire un mode de pilotage du moteur thermique 4 particulièrement avantageux.

De manière avantageuse, le moteur thermique 4 est piloté à "puissance maximale" pour produire un maximum de puissance en consommant en instantané le gaz combustible produit par le dispositif à gazogène 2. La vitesse de rotation du moteur thermique 4 est gérée par le contrôle du couple de la génératrice 6, ainsi que par le contrôle sur l'admission d'air 24 par la vanne 26.

Ceci permet de découpler la production de gaz et la demande du conducteur. Le différentiel entre cette production et cette demande est absorbé ou fourni par la batterie.

A tout instant, le gaz combustible produit par le dispositif à gazogène est transformé en électricité avec un rendement optimal.

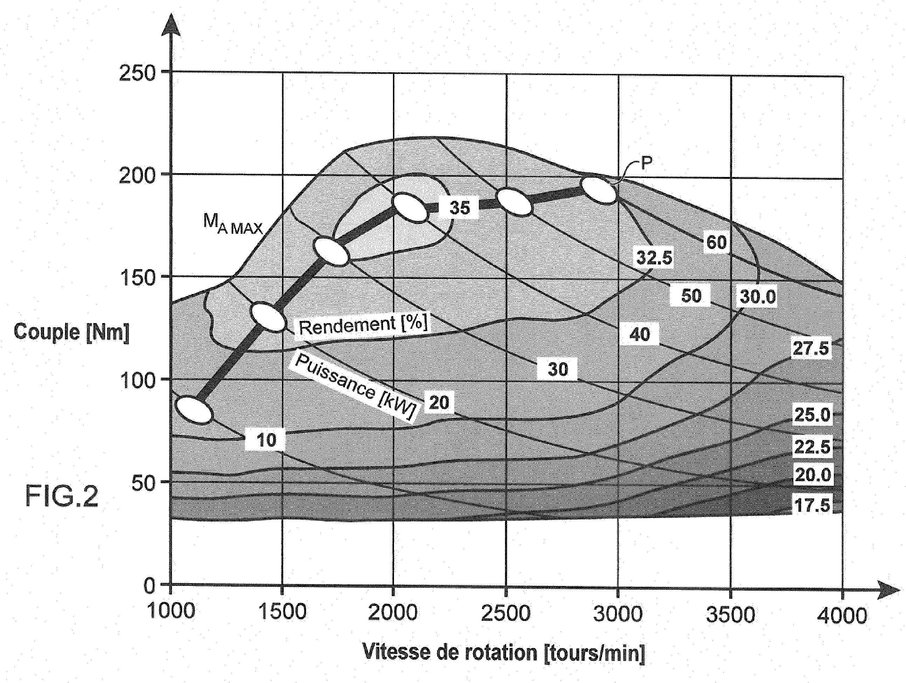

Sur la figure 2, on peut voir un diagramme couple (en Nm) - vitesse de rotation (en tour/min) - puissance (en kW) - rendement (en %) d'un moteur thermique.

Sur ce diagramme les lignes d'isopuissance allant de 10 kW à 60 kW sont les hyperboles en pointillés et les lignes en trait plein délimitent les zones de rendement.

La courbe P correspond aux points de fonctionnement optimal en rendement qu'on cherchera à atteindre à l'aide de notre invention.

De préférence, la zone de « couple maximum » est recherchée car, comme le montre la figure 2, pour une même puissance, il est préférable de fonctionner à fort couple, avantageusement à environ au moins 50% du couple maximum pour la vitesse de rotation donnée, et de manière encore plus avantageuse à environ 75% du couple maximum pour une vitesse donnée, et faible vitesse, L'utilisation d'une génératrice permet de contrôler la vitesse du moteur thermique et donc de changer de point de manière continue sur la courbe P. A titre d'exemple, le contrôle du couple de la génératrice, qui peut être une machine synchrone ou asynchrone, peut se faire par son onduleur, par le réglage de l'excitation dans le cas d'une génératrice à courant continu, et/ou par le pilotage de l'excitation d'une machine synchrone à excitation séparée.

Il sera remarqué que le rendement de la génératrice est très élevé et dépend relativement peu du point de fonctionnement par rapport à celui d'un moteur thermique, par conséquent le rendement du moteur thermique est quasiment équivalent au rendement de l'ensemble moteur thermique et génératrice. Ainsi la ligne de fonctionnement optimal déterminée ci-dessus sur la figure 2 peut être atteinte en recherchant le maximum de puissance électrique.

De préférence, le moteur thermique est piloté de sorte que le gaz combustible soit consommé avec le meilleur rendement énergétique et qu'une combustion la plus complète possible ait lieu pour réduire le rejet d'imbrûlés et ainsi respecter les normes antipollution imposées aux véhicules automobiles. Pour cela l'admission d'air dans la chambre de combustion du moteur thermique est pilotée, ainsi que le couple de la génératrice électrique.

On peut de manière très avantageuse piloter le moteur thermique au moyen d'un algorithme de type MPPT (« maximum power point tracking ou « recherche du point de fonctionnement à puissance maximale »), cet algorithme étant implémenté pour piloter le couple de la génératrice. La puissance électrique est maximale lorsque la puissance mécanique est maximale, i.e. lorsque tout le gaz combustible est consommé, et qu'on est au point de rendement maximal du moteur thermique.

Les algorithmes de recherche de maximum de puissance ont été plus particulièrement développés dans le domaine des systèmes photovoltaïques pour extraire la puissance maximale à tout instant en suivant les variations de l'ensoleillement.

De manière très avantageuse, le rendement peut encore être optimisé en utilisant l'information donnée par la sonde lambda disposée au niveau de la sortie des gaz d'échappement du moteur thermique. En déterminant la composition des gaz d'échappement et en agissant sur le contrôle du moteur thermique et donc sur le pilotage de la génératrice électrique et sur la quantité d'air arrivant dans le moteur thermique en pilotant la vanne 26, le rendement peut être optimisé.

A titre d'exemple, en cas d'excès d'imbrûlés, la quantité d'air dans le moteur thermique est augmentée afin de consommer tout le gaz combustible produit par le dispositif à gazogène. L'excès de puissance est alors absorbé par la ou les batteries. Ce fonctionnement est contraire à l'état de l'art du pilotage des moteurs à essence dans les véhicules classiques : dans le cas d'excès d'imbrûlés, les contrôleurs des moteurs à essence diminuent la quantité de carburant injectée, le carburant non consommé reste dans le réservoir et la puissance produite diminue.

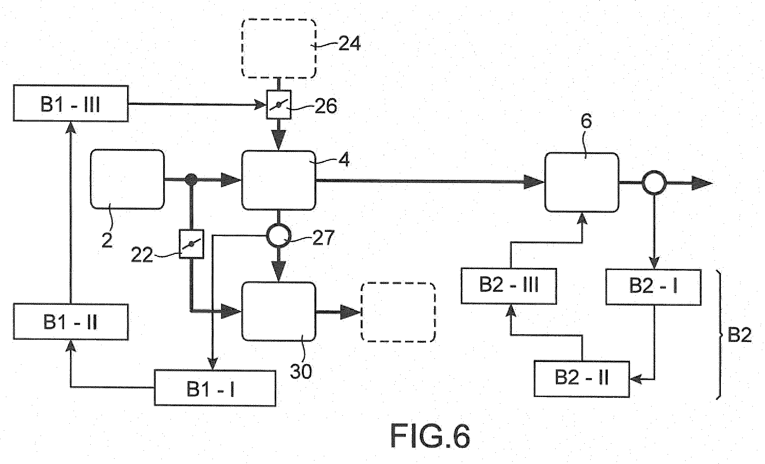

Sur la figure 6 sont schématisés des exemples de boucles de régulation B1 et B2 du moteur thermique. Ces boucles de régulation sont mises en oeuvre par un calculateur.

D'une part, les moyens de commande du moteur comportent une boucle B1 prenant la mesure de la sonde lambda des gaz brûlés du moteur thermique et commandent la vanne d'admission d'air 26 dans la chambre de combustion du moteur thermique 4.

La boucle B1 comporte les étapes suivantes :
B1-I - détermination de la composition des gaz en sortie de la chambre de combustion du moteur thermique; par exemple on mesure la quantité d'oxygène, une recherche de la meilleure combustion est faite,
B1-II - recherche de la meilleure combustion,
B1-III - sur la base de cette recherche la quantité d'air admise est modifiée en commandant la vanne d'admission d'air 26. S'il manque de l'oxygène, le mélange air-gaz combustible est trop riche en combustible, on augmente alors la quantité d'air et inversement si l'oxygène est en excès, le mélange air-gaz combustible est trop pauvre en combustible, la quantité d'oxygène est réduite.

La boucle B2 est destinée à contrôler la génératrice 6.

De préférence, le couple de la génératrice est piloté, de façon à ce que :
- la vitesse du moteur thermique soit être supérieure à la vitesse de ralenti du moteur, typiquement 600-1000 tours par minute afin d'éviter que le moteur cale.
- La puissance électrique soit maximale.

La boucle B2 comporte les étapes suivantes :
B2-I- la mesure de la puissance électrique en sortie de la génératrice,
B2-II - la recherche du maximum de puissance électrique au moyen d'un algorithme de type MPPT,
B2-III - pilotage de la génératrice en modifiant sa vitesse de rotation qui agit sur la vitesse de rotation du moteur thermique, ce qui permet de suivre la courbe P. Par exemple, à chaque instant, il est possible de faire varier légèrement le couple de la génératrice, et donc celui du moteur thermique, autour d'un couple de référence. Si la puissance électrique produite est supérieure, on affecte à la référence cette nouvelle valeur de couple.

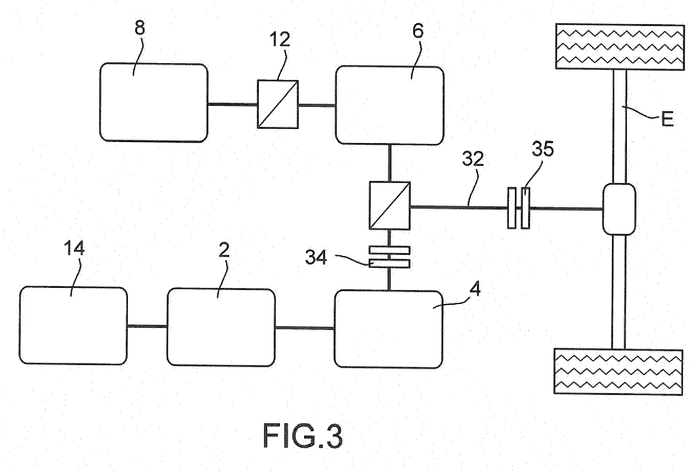

Sur la figure 3, on peut voir un autre mode de réalisation d'un système d'entraînement selon l'invention dans lequel le moteur thermique peut entraîner directement l'essieu.

Dans ce mode de réalisation, le moteur thermique 4 et le moteur électrique 10 sont couplés en parallèle à l'essieu E, et appliquent le couple de sortie sur un même arbre 32. Ce mode de réalisation est souvent appelé « hybride parallèle » dans les véhicules hybrides essence/électrique.

Le moteur électrique 10 peut fonctionner en génératrice pour convertir l'excès d'énergie mécanique produite par le moteur thermique 4.

Un embrayage 34 est disposé entre l'arbre de sortie du moteur thermique 4 et l'arbre 32. Cet embrayage permet de déconnecter le moteur thermique lorsque le véhicule est à l'arrêt. Une boîte de vitesse est également prévue pour adapter les vitesses de rotation du moteur thermique et de l'arbre 32. Le moteur électrique tourne toujours à une vitesse proportionnelle à celle de l'arbre 32. Un dispositif de boîte de vitesse à double embrayage (amont et aval de la boîte) peut aussi être utilisé.

De manière très avantageuse, un autre embrayage 35 est disposé dans l'arbre 32 pour isoler le moteur thermique 4 et le moteur électrique 10 de l'essieu E et faire fonctionner le moteur électrique 6 en génératrice et permettre de récupérer l'énergie des gaz combustible à l'arrêt du véhicule.

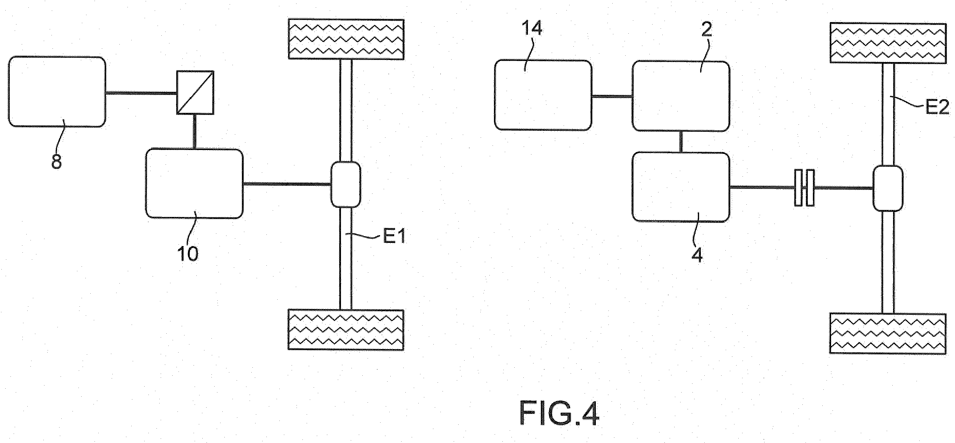

Sur la figure 4, on peut voir un autre mode de réalisation, dans lequel le moteur électrique entraîne un essieu E1 et le moteur thermique entraîne l'essieu E2.

Dans ce mode de réalisation, le moteur électrique 10 est également destiné à fonctionner en génératrice électrique, l'énergie produite en excès par le moteur thermique 4 est transmise à la génératrice via la roue et les deux essieux E1, E2.

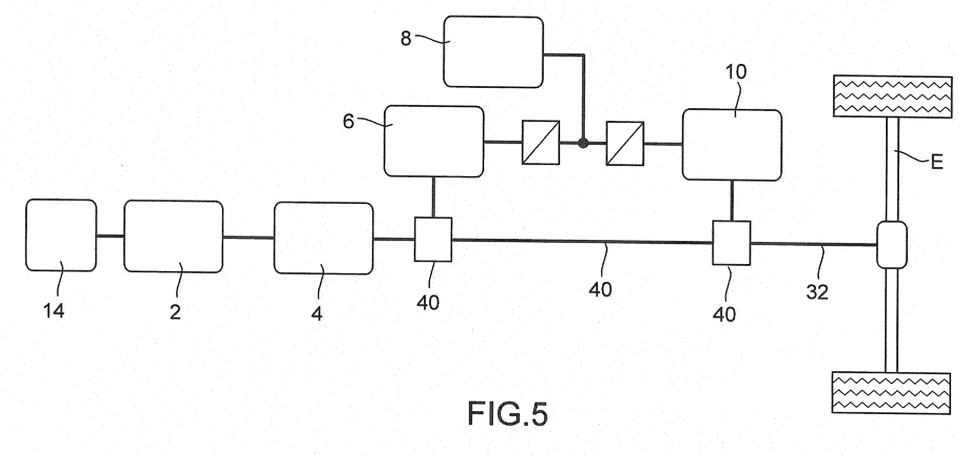

Sur la figure 5, on peut voir un autre mode de réalisation du système d'entraînement, qui diffère de celui de la figure 1 en ce qu'un train épicycloïdal 40 relie l'arbre du moteur thermique 4, par exemple relié sur le porte-satellites, l'arbre de la génératrice électrique 6, par exemple relié au pignon central, et l'arbre des roues 32 commun avec l'arbre du moteur électrique 10, par exemple relié à la couronne. Il sera compris que l'arbre du moteur thermique, celui de la génératrice électrique et celui des roues peuvent être chacun relié à des éléments du train épicycloïdal.

Ainsi il est possible de transmettre directement une partie de la puissance mécanique du moteur thermique 4 aux roues, ce qui réduit les pertes dans la génératrice, les convertisseurs et le moteur électrique. Le fonctionnement est identique à celui du mode de réalisation de la figure 1.

Le système d'entraînement présente un intérêt particulier pour les véhicules tels que les machines agricoles, par exemple un tracteur. En effet, le combustible est souvent disponible sur place et l'agriculteur est à la fois producteur et consommateur lorsqu'il dispose de combustible valorisable (résidu de taille d'arbres de production, coquille de noix...).

Il s'applique également aux engins de chantier type pelleteuse,
La présente invention peut également s'appliquer aux véhicules de tourisme.

Le système d'entraînement peut servir à entraîner un autre dispositif qu'un essieu d'un véhicule automobile : il peut s'agir par exemple d'une machine-outil transportable, un engin de chantier, un tracteur ou une autre machine agricole. Dans les domaines des engins de chantier et agricole, l'invention permet de fonctionner sur l'énergie de la batterie pour des opérations ponctuelles de courtes durées, et de démarrer le système à gazogène pour des opérations plus longues. La batterie peut aussi être rechargée à la prise dans les phases de stockage.

La présente invention peut également être utilisée pour réaliser de groupes électrogènes transportables à batteries, dans ce cas un moteur électrique n'est pas requis, l'énergie électrique étant utilisée en sortie de la génératrice /ou des batteries.

Des groupes électrogènes ainsi réalisés ne présentent pas de problème de démarrage très lent, de limitation en puissance, d'arrêt intempestif, etc. L'invention permet de s'affranchir des faibles rendements des groupes électrogènes à faibles charges. Contrairement aux groupes électrogènes classiques où la rotation est maintenue à faible charges avec des niveaux de pertes prohibitifs par rapport à l'énergie fournie, l'invention permet de fournir l'énergie électrique avec un niveau de pertes de quelques pourcents lorsque la batterie est utilisée pour fournir l'énergie et que le moteur thermique est arrêté, puis le système à gazogène et le moteur thermique peuvent être démarrés, pour fonctionner ensuite à un niveau de rendement maximum pour recharger la batterie. Lorsque la charge souhaitée de celle-ci va être atteint, l'arrivée de combustible est interrompue, le système à gazogène utilise le gaz résiduel fourni puis est arrêté. La fourniture d'énergie continue alors à être assurée par la batterie. Par le cycle ainsi décrit, les pertes de rendement sont minimisées. Avantageusement, le gazogène et le moteur thermique peuvent être maintenus en température pour le redémarrage au cycle suivant après décharge de la batterie au-dessous d'un seuil choisi par exemple.

## Revendications

1. Dispositif de production d'énergie à gazogène comportant:
- une sortie délivrant une énergie mécanique et/ou une énergie électrique,
- un dispositif à gazogène (2) comportant une alimentation en matériau combustible, une admission d'air (16) et une évacuation de gaz combustible (17),
- un moteur thermique (4) comportant une admission d'air (24), une admission de gaz combustible (23), et une évacuation des gaz d'échappement (25),
- au moins une batterie de stockage de l'électricité (8),
- une génératrice de courant électrique (6),
- des moyens de connexion entre une sortie l'évacuation du gaz combustible du dispositif à gazogène et l'admission du gaz combustible du moteur thermique (4),
le moteur thermique (4) étant couplé au moins à la génératrice de courant électrique (6) pour lui fournir une énergie mécanique,
la génératrice électrique (6) étant couplée au moins à la batterie (8),
des moyens de commande de sorte que les moyens de connexion entre le dispositif à gazogène (2) et le moteur thermique (4) injectent tout le gaz combustible produit par le dispositif à gazogène dès lors que le dispositif à gazogène (2) produit suffisamment de gaz pour faire fonctionner le moteur thermique (4) et jusqu'à ce que le moteur thermique (4) soit arrêté et de sorte que l'énergie requise en sortie du dispositif de production d'énergie est indépendante de la production de gaz combustible, le différentiel entre la demande d'énergie et celle obtenue par la quantité de gaz produite par le dispositif à gazogène (2) étant compensé par la batterie (8) qui soit délivre l'énergie manquante, soit absorbe l'excès d'énergie mécanique produite par le moteur thermique (4) et converti par la génératrice (6).

2. Dispositif de production d'énergie à gazogène selon la revendication 1, dans lequel la génératrice (6) est commandée de sorte à fonctionner à tout instant t à la puissance maximale du moteur thermique pour le flux de gaz d'alimentation à l'instant ou à la puissance électrique maximale, la vitesse de rotation du moteur thermique (4) étant avantageusement commandée par le couple de la génératrice (6) de telle sorte qu'il fonctionne à un couple élevé et à vitesse de rotation faible.

3. Dispositif de production d'énergie à gazogène selon la revendication 1 ou 2, comportant une sonde (25) en sortie des gaz d'échappement afin de déterminer la composition des gaz d'échappement, une vanne d'admission d'air (26) dans le moteur thermique (4) étant pilotée sur la base de cette composition.

4. Dispositif de production d'énergie à gazogène selon l'une des revendications 1 à 3, dans lequel les moyens de commande mettent en oeuvre un algorithme de recherche du point de fonctionnement à puissance électrique maximale.

5. Dispositif de production d'énergie à gazogène selon l'une des revendications 1 à 4, dans lequel les moyens de connexion comportent des moyens de dérivation (22) du gaz combustible en sortie du dispositif à gazogène (2), de sorte que dans une phase de démarrage avant que le dispositif à gazogène (2) ne produise suffisamment de gaz pour alimenter le moteur thermique (4), le gaz combustible soit dérivé et n'alimente pas le moteur thermique (4), ledit dispositif comportant avantageusement des moyens pour réchauffer le moteur thermique (4) à partir de l'énergie du gaz combustible dérivé.

6. Dispositif de production d'énergie à gazogène selon la revendication 5, comportant un brûleur (30) en aval des moyens de dérivation (22), de sorte à brûler le gaz combustible dérivé, un pot catalytique étant avantageusement prévu, en aval du brûleur (30) ou formant le brûleur, le pot catalytique étant avantageusement disposé à la sortie des gaz d'échappement du moteur thermique (4).

7. Dispositif de production d'énergie à gazogène selon l'une des revendications 1 à 6, comportant un réservoir (14) de matériau combustible et un moyen d'alimentation d'un foyer du dispositif à gazogène (2) à partir du réservoir, le moyen d'alimentation étant avantageusement une vis sans fin (15).

8. Système d'entraînement pour véhicule automobile comportant un moteur électrique (10) et au moins un dispositif de production d'énergie à gazogène selon l'une des revendications précédentes, dans lequel la sortie du dispositif de production d'énergie est reliée à un moteur électrique (10) et le moteur électrique (10) est relié mécaniquement à au moins un essieu (E, E1, E2) du véhicule

9. Système d'entraînement selon la revendication 8, dans lequel l'essieu (E) est entrainé uniquement par le moteur électrique (10) et dans lequel le moteur thermique (4) et le moteur électrique (10) sont reliés mécaniquement au même essieu, de manière préférée par un train épicycloïdal ou dans lequel le moteur thermique (4) et le moteur électrique (10) sont reliés mécaniquement chacun à un essieu différent (E1, E2).

10. Système d'entraînement selon la revendication 9, comportant une machine électrique formant à la fois le moteur électrique et la génératrice.

11. Système d'entraînement selon la revendication 9, étant tel qu'à la fin de roulage du véhicule lorsque l'essieu (E) est à l'arrêt, le moteur thermique (4) continue de fonctionner de sorte à convertir le gaz combustible en électricité via la génératrice.

12. Véhicule automobile hydride comportant deux essieux et au moins un système d'entraînement selon l'une des revendications 8 à 11, un des essieux étant entraîné par au moins le moteur électrique.

13. Procédé de fonctionnement d'un dispositif de production d'énergie à gazogène selon l'une des revendications 1 à 7 ou du système d'entraînement selon l'une des revendications 8 à 11, comportant les étapes:
a) fourniture de l'énergie au démarrage du dispositif de production d'énergie à gazogène par la batterie (8),
b) mise en route du dispositif à gazogène (2), les moyens de dérivation (22) dérivant les gaz combustible produit de sorte qu'il ne pénètre pas dans le moteur thermique (4),
c) détection d'une production d'une quantité de gaz combustible suffisante pour faire fonctionner le moteur thermique (4),
d) les moyens de connexion dirigent tout le gaz combustible dans le moteur thermique (4) et démarrage du moteur thermique (4),
e) transformation de l'énergie mécanique produite en énergie électrique par la génératrice (6),
d) arrêt du dispositif à gazogène (2).
e) arrêt du moteur thermique (4),

14. Procédé de fonctionnement selon la revendication 13, dans lequel, lors de l'étape e), on recherche le maximum de puissance électrique en modifiant le couple de la génératrice (6) appliqué au moteur thermique (4) et en mesurant la nouvelle puissance électrique délivrée.

15. Procédé de fonctionnement selon la revendication 13 ou 14, dans lequel entre l'étape b) et l'étape c), le gaz combustible sert à réchauffer le moteur thermique (4) soit directement soit en étant brûlé.

16. Procédé de fonctionnement selon l'une des revendications 13 à 15, dans lequel le dispositif à gazogène (2) est démarré lorsque la batterie (8) présente une charge inférieure un seuil donné et dans lequel lorsque la demande en énergie est nulle, le dispositif à gazogène est arrêté et le moteur thermique (4) continue de fonctionner pour transformer le gaz combustible qui continue d'être produit.

## Patentansprüche

1. Energieerzeugungsvorrichtung mit Vergaser, enthaltend:
- einen Auslass, der eine mechanische Energie und/oder eine elektrische Energie liefert,
- eine Vergaservorrichtung (2), enthaltend eine Versorgung mit brennbarem Material, eine Luftzuleitung (16) und eine Ableitung für brennbares Gas (17),
- einen Verbrennungsmotor (4) mit einer Luftzuleitung (24), einer Zuleitung für brennbares Gas (23) und einer Ableitung für Abgase (25),
- zumindest eine Batterie zum Speichern von Elektrizität (8),
- einen Stromgenerator (6),
- Verbindungseinrichtungen zum Verbinden zwischen einem Auslass der Ableitung für brennbares Gas der Vergaservorrichtung und einer Zuleitung für brennbares Gas des Verbrennungsmotors (4),
wobei der Verbrennungsmotor (4) zumindest mit dem Stromgenerator (6) gekoppelt ist, um diesem eine mechanische Energie bereitzustellen,
wobei der Stromgenerator (6) zumindest mit der Batterie (8) gekoppelt ist,
- Steuereinrichtungen, so dass die Verbindungseinrichtungen zum Verbinden zwischen der Vergaservorrichtung (2) und dem Verbrennungsmotor (4) das gesamte von der Vergaservorrichtung erzeugte, brennbare Gas einspritzen, sobald die Vergaservorrichtung (2) genügend Gas erzeugt, um den Verbrennungsmotor (4) zu betreiben und solange, bis der Verbrennungsmotor (4) angehalten wird, und so dass die am Auslass der Energieerzeugungsvorrichtung erforderliche Energie von der Erzeugung von brennbarem Gas unabhängig ist, wobei die Differenz zwischen der angeforderten Energie und derjenigen, die durch die von der Vergaservorrichtung (2) erzeugten Gasmenge erhalten wird, durch die Batterie (8) ausgeglichen wird, die entweder die fehlende Energie liefert oder das Übermaß an von dem Verbrennungsmotor (4) erzeugter und von dem Stromgenerator (6) umgewandelter mechanischer Energie (4) aufnimmt.

2. Energieerzeugungsvorrichtung mit Vergaser nach Anspruch 1, wobei der Stromgenerator (6) so gesteuert wird, dass er zu jedem Zeitpunkt t bei maximaler Leistung des Verbrennungsmotors für den Versorgungsgasstrom an dem Zeitpunkt bzw. der maximalen elektrischen Leistung betrieben wird, wobei die Drehzahl des Verbrennungsmotors (4) vorteilhaft über das Drehmoment des Stromgenerators (6) gesteuert wird, so dass er bei hohem Drehmoment und geringer Drehzahl betrieben wird.

3. Energieerzeugungsvorrichtung mit Vergaser nach Anspruch 1 oder 2, enthaltend eine Sonde (25) am Abgasauslass, um die Zusammensetzung der Abgase zu bestimmen, wobei ein Ventil (26) zum Lufteinlass in den Verbrennungsmotor (4) auf Grundlage dieser Zusammensetzung angesteuert wird.

4. Energieerzeugungsvorrichtung mit Vergaser nach einem der Ansprüche 1 bis 3, wobei die Steuereinrichtungen einen Suchalgorithmus zum Suchen des Betriebspunkts mit maximaler elektrischer Leistung durchführen.

5. Energieerzeugungsvorrichtung mit Vergaser nach einem der Ansprüche 1 bis 4, wobei die Verbindungseinrichtungen Abzweigeinrichtungen (22) für das brennbare Gas am Auslass der Vergaservorrichtung (2) aufweisen, so dass in einer Anlaufphase, bevor die Vergaservorrichtung (2) ausreichend Gas zum Versorgen des Verbrennungsmotors erzeugt, das brennbare Gas abgezweigt wird und nicht dem Verbrennungsmotor (4) zugeführt wird, wobei die Vorrichtung vorteilhaft Einrichtungen zum Erwärmen des Verbrennungsmotors (4) ausgehend von der Energie des abgezweigten brennbaren Gases aufweist.

6. Energieerzeugungsvorrichtung mit Vergaser nach Anspruch 5, enthaltend einen den Abzweigeinrichtungen (22) nachgelagerten Brenner (30), so dass das abgezweigte brennbare Gas verbrannt wird, wobei vorteilhaft ein Katalysator vorgesehen ist, der dem Brenner (30) nachgelagert ist bzw. den Brenner bildet, wobei der Katalysator vorteilhaft am Abgasauslass des Verbrennungsmotors (4) angeordnet ist.

7. Energieerzeugungsvorrichtung mit Vergaser nach einem der Ansprüche 1 bis 6, enthaltend einen Vorratsbehälter (14) für brennbares Material und eine Versorgungseinrichtung zum Versorgen eines Brennraums der Vergaservorrichtung (2) ausgehend von dem Vorratsbehälter, wobei die Versorgungseinrichtung vorteilhaft ein Schneckengetriebe (15) ist.

8. Antriebssystem für Kraftfahrzeuge mit einem Elektromotor (10) und zumindest einer Energieerzeugungsvorrichtung mit Vergaser nach einem der vorangehenden Ansprüche, wobei der Auslass der Energieerzeugungsvorrichtung mit einem Elektromotor (10) verbunden ist und der Elektromotor (10) mechanisch mit zumindest einer Achse (E, E1, E2) des Fahrzeugs verbunden ist.

9. Antriebssystem nach Anspruch 8, wobei die Achse (E) nur über den Elektromotor (10) angetrieben wird und wobei der Verbrennungsmotor (4) und der Elektromotor (1) mechanisch mit der gleichen Achse verbunden sind, vorzugweise über ein Umlaufrädergetriebe, oder wobei der Brennungsmotor (4) und der Elektromotor (10) jeweils mechanisch mit einer anderen Achse (E1, E2) verbunden sind.

10. Antriebssystem nach Anspruch 9, enthaltend eine elektrische Maschine, die zugleich den Elektromotor und den Stromgenerator bildet.

11. Antriebssystem nach Anspruch 9, das derart ausgebildet ist, dass am Ende der Fahrt des Fahrzeugs dann, wenn die Achse (E) stillsteht, der Verbrennungsmotor (4) weiterläuft, so dass das brennbare Gas über den Stromgenerator in Elektrizität umgewandelt wird.

12. Hybrid-Kraftfahrzeug mit zwei Achsen und zumindest einem Antriebssystem nach einem der Ansprüche 8 bis 11, wobei eine der Achsen zumindest von dem Elektromotor angetrieben wird.

13. Verfahren zum Betreiben einer Energieerzeugungsvorrichtung mit Vergaser nach einem der Ansprüche 1 bis 7 oder des Antriebssystems nach einem der Ansprüche 8 bis 11, umfassend die nachstehenden Schritte:
a) Bereitstellen von Energie beim Anlaufen der Energieerzeugungsvorrichtung mit Vergaser über die Batterie (8),
b) Ingangsetzen der Vergaservorrichtung (2), wobei die Abzweigeinrichtungen (22) das erzeugte brennbare Gas abzweigen, so dass sie nicht in den Verbrennungsmotor (4) eindringen,
c) Erfassen einer Erzeugung einer ausreichenden Menge von brennbarem Gas, um den Verbrennungsmotor (4) zu betreiben,
d) Einleiten des gesamten brennbaren Gases in den Verbrennungsmotor (4) über die Verbindungseinrichtungen und Anlassen des Verbrennungsmotors (4),
e) Umwandeln der erzeugten mechanischen Energie in elektrische Energie über den Stromgenerator (6),
d) Anhalten der Vergaservorrichtung (2).
e) Anhalten des Verbrennungsmotors (4).

14. Betriebsverfahren nach Anspruch 13, wobei in Schritt e) nach der maximalen elektrischen Leistung gesucht wird, indem das Drehmoment des Stromgenerators (6) geändert wird, das auf den Verbrennungsmotor (4) aufgebracht wird, und die neu bereitgestellte elektrische Leistung gemessen wird.

15. Betriebsverfahren nach Anspruch 13 oder 14, wobei zwischen Schritt b) und Schritt c) das brennbare Gas dazu dient, den Verbrennungsmotor (4) entweder direkt oder unter Verbrennung zu erwärmen.

16. Betriebsverfahren nach einem der Ansprüche 13 bis 15, wobei die Vergaservorrichtung (2) dann angelassen wird, wenn die Batterie (8) eine geringere Ladung als ein gegebener Schwellwert aufweist und wobei dann, wenn der Energiebedarf null ist, die Vergaservorrichtung angehalten wird und der Verbrennungsmotor (4) weiterläuft, um das brennbare Gas umzuwandeln, das weiterhin erzeugt wird.

## Claims

1. Gasifier energy production device comprising:
- an output supplying mechanical energy and/or electrical energy,
- a gasifier device (2) comprising a supply of fuel material, an air inlet (16) and a fuel gas outlet (17),
- a heat engine (4) comprising an air inlet (24), a fuel gas inlet (23), and an exhaust gas outlet (25),
- at least one electricity storage battery (8),
- an electrical current generator (6),
- connection means between an evacuation outlet of the fuel gas from the gasifier device and inlet of fuel gas to the heat engine (4),
the heat engine (4) being coupled to at least the electrical current generator (6) to supply mechanical energy to it,
the electricity generator (6) being coupled to at least the battery (8),
control means such that the connection means between the gasifier device (2) and the heat engine (4) inject all the fuel gas produced by the gasifier device once the gasifier device (2) has produced sufficient gas to make the heat engine (4) operate and until the heat engine (4) has stopped such that the energy required at the output from the energy production device is independent of the production of fuel gas, the differential between the energy demand and the energy obtained from the quantity of gas produced by the gasifier device (2) being compensated by the battery (8) that either outputs the missing energy, or absorbs the excess mechanical energy produced by the heat engine (4) and converted by the generator (6).

2. Gasifier energy production device according to claim 1, in which the generator (6) is controlled so that it operates at the maximum power of the heat engine at all times t for the supply gas flow at the time or at the maximum electrical power, the rotation speed of the heat engine (4) being advantageously controlled by the torque of the generator (6) such that it operates at high torque and low rotation speed.

3. Gasifier energy production device according to claim 1 or 2, comprising a probe (25) at the exhaust gases outlet to determine the composition of exhaust gases, an air inlet valve (26) in the heat engine (4) being controlled based on this composition.

4. Gasifier energy production device according to one of claims 1 to 3, in which control means use an algorithm for tracking the operating point at maximum electrical power.

5. Gasifier energy production device according to one of claims 1 to 4, in which the connection means comprise means of redirecting (22) the fuel gas at the outlet from the gasifier device (2), such that during a starting phase, the fuel gas is redirected and does not supply the heat engine (4) until the gasifier device (2) produces sufficient gas to supply the heat engine (4), said device comprising advantageously means of warming up the heat engine (4) using the energy of the redirected fuel gas.

6. Gasifier energy production device according to claim 5, comprising a burner (30) downstream from the redirection means (22), such that the redirected fuel gas is burned, a catalytic converter advantageously being provided downstream from the burner (30) or forming the burner, the catalytic converter being advantageously provided at the exhaust gases outlet from the heat engine (4).

7. Gasifier energy production device according to one of claims 1 to 6, comprising a tank (14) of fuel material and a means of supplying a fire place of the gasifier device (2) from the tank, the supply means advantageously being a worm screw (15).

8. Drive system for automobile vehicle comprising an electric motor (10) and at least one gasifier energy production device according to one of the previous claims, in which the outlet from the energy production device is connected to an electric motor (10) and the electric motor (10) is mechanically connected to at least one axle (E, E1, E2) of the vehicle

9. Drive system according to claim 8, in which the axle (E) is driven by the electric motor alone (10) and in which the heat engine (4) and the electric motor (10) are mechanically connected to the same axle, preferably through an epicyclic gear or in which the heat engine (4) and the electric motor (10) are mechanically connected to different axles (E1, E2).

10. Drive system according to claim 9, comprising an electrical machine forming the electric motor and the generator.

11. Drive system according to claim 9, being such that when the vehicle has stopped running and the axle (E) is stopped, the heat engine (4) continues to operate so as to convert the fuel gas into electricity through the generator.

12. Hybrid automobile vehicle comprising two axles and at least one drive system according to one of claims 8 to 11, one of the axles being driven by at least the electric motor.

13. Operating method for a gasifier energy production device according to one of claims 1 to 7 or the drive system according to one of claims 8 to 11, comprising the following steps:
a) the battery (8) supplies energy when the gasifier energy production device starts,
b) start the gasifier device (2), the redirection means (22) redirecting the fuel gas produced so that it does not enter the heat engine (4),
c) detect when a sufficient quantity of fuel gas is produced to run the heat engine (4),
d) connection means direct all fuel gas to the heat engine (4) and the heat engine starts (4),
e) transform the generated mechanical energy into electrical energy through the generator (6),
d) stop the gasifier device (2).
e) stop the heat engine (4),

14. Operating method according to claim 13, in which, in step e), the maximum electrical power is tracked by modifying the torque of the generator (6) applied to the heat engine (4) and measuring the new output electrical power.

15. Operating method according to claim 13 or 14, in which between step b) and step c), the fuel gas is used to warm up the heat engine (4) either directly or by being burned.

16. Operating method according to one of claims 13 to 15, in which the gasifier device (2) is started when the battery (8) charge is below a given threshold and in which when the energy demand is zero, the gasifier device is stopped and the heat engine (4) continues to operate to transform the fuel gas that is still being produced.
